# EUROPEAN PATENT SPECIFICATION

(11) **EP 2 856 598 B1**
(45) Date of publication and mention of the grant of the patent: **19.07.2023**
(21) Application number: 13797168.5
(22) Date of filing: 28.05.2013
(51) Int. Cl.: H02J 3/18, H02J 3/44, H02M 7/219, H02M 7/797, H02J 3/38

(54) **INPUT AC VOLTAGE CONTROL BI-DIRECTIONAL POWER CONVERTERS**
BIDIREKTIONALE LEISTUNGSWANDLER MIT STEUERUNG DER EINGANGSWECHSELSPANNUNG
CONVERTISSEURS DE PUISSANCE BIDIRECTIONNELS AVEC COMMANDE DE TENSION ALTERNATIVE D'ENTRÉE

(30) Priority: 01.06.2012 US 201261654628 P
(43) Date of publication of application: 08.04.2015
(73) Proprietor: The University of Hong Kong, Hong Kong (CN)
(72) Inventor: LEE, Chi Kwan, Hong Kong (CN); HUI, Shu Yuen, Ron, Hong Kong (CN)
(74) Representative: HGF
(86) International application number: PCT/CN2013/076330
(87) International publication number: WO 2013/178054

(56) References cited:
- EP-A1- 0 085 249
- EP-B1- 0 085 249
- WO-A1-96/18937
- CN-A- 101 710 704
- CN-A- 102 163 856
- JP-A- H05 300 674
- JP-A- 2007 058 676
- US-A- 5 091 840
- US-A1- 2011 188 272
- US-A1- 2012 080 420
- US-A1- 2012 080 420
- HUI S Y R ET AL: "A BI-DIRECTIONAL AC-DC POWER CONVERTER WITH POWER FACTOR CORRECTION", PESC '98. RECORD OF THE 29TH ANNUAL IEEE POWER ELECTRONICS SPECIALISTS CONFERENCE. FUKUOKA, MAY 18 - 21, 1998; [PESC. ANNUAL POWER ELECTRONICS SPECIALISTS CONFERENCE], NEW YORK, NY : IEEE, US, 18 May 1998 (1998-05-18), pages 1323-1329, XP001004310, ISBN: 978-0-7803-4490-7
- YIP S C ET AL: "A unified control scheme for a bi-directional AC-DC converter with high power quality", APEC 2001. 16TH. ANNUAL IEEE APPLIED POWER ELECTRONICS CONFERENCE AND EXPOSITION. ANAHEIM, CA, MARCH 4 - 8, 2001; [ANNUAL APPLIED POWER ELECTRONICS CONFERENCE], NEW YORK, NY : IEEE, US, vol. 1, 4 March 2001 (2001-03-04), pages 74-80, XP010535977, DOI: 10.1109/APEC.2001.911630 ISBN: 978-0-7803-6618-3

## Description

### BACKGROUND OF THE INVENTION

### Technical Field

The subject matter disclosed herein relates to input ac voltage regulation and power flow control of bi-directional AC-DC power converters and bi-directional AC-AC converters.

### Description of Related Art

The increasing awareness of climate charge has prompted many governments worldwide to impose policies that call for the introduction of renewable energy sources. Presentlypower generation is "centralized" and "unidirectional," By monitoring the voltage and frequencies of the power grid, the utility companies can determine the amount of electricity needed by the load centers (such as a city) and can generate the required amount of electric power from the power plants. A balance of power ge neration and load is an essential condition for the stability of the power system. Although the difference between power generation and load demand can be absorbed by energy storage, energy storage is either expensive (such as batteries) or dependent on locations (such as water reservoirs). For existing power systems, the control paradigm is to have "the power generation follow the load demand" in order to maintain power system stability.

In future power grids, renewable energy sources such as solar panels and wind power generators will be installed in a "distributed" manner and the power flow could be "bidirectional," i.e., the power can be supplied to the grid from these generators or taken from the grid by these generators. These distributed renewable power sources, both known or unknown to the utility companies, make it very difficult for the power companies to control the power balance. Therefore, there is a need for a shift of the control paradigm for a future power grid with substantial penetration of intermittent renewable energy. In the new paradigm "the load demand has to follow power generation."

In order to achieve power balance, various methods have been proposed previously. Scheduled load shedding has been a traditional method in load power control. However, such a method is not useful for maintaining dynamic power balance in real-time. Smart loads with ON/OFF control for electric loads, such as refrigerators and air-conditioning systems [1-3], have been proposed for real-time power balance. See, the articles [1]S.C. Lee et al., "Demand Side Management With Air Conditioner Loads Based on the Queuing System Model," IEEE Transactions on Power Systems, Volume: 26 , Issue: 2, 2011, pages 661 - 668; [2]G.C. Heffner et al., "Innovative approaches to verifying demand response of water heater load control," IEEE Transactions on Power Delivery Volume: 21 , Issue: 1, 2006, pages 388 - 397; and [3] A. Brooks et al.,"Demand Dispatch," IEEE Power and Energy Magazine, Volume: 8 , Issue: 3, 2010, pages 20 - 29. However, shutting down electrical appliances is intrusive and may cause inconvenience to and opposition from consumers.

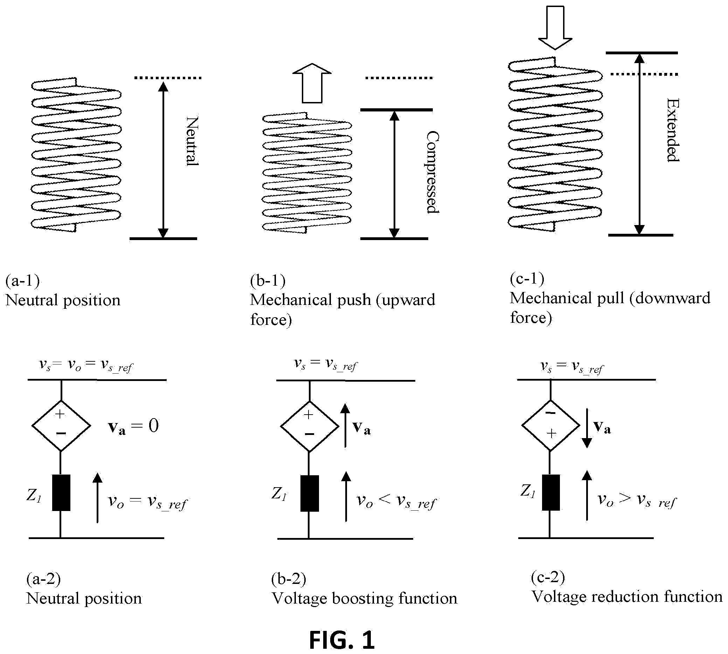

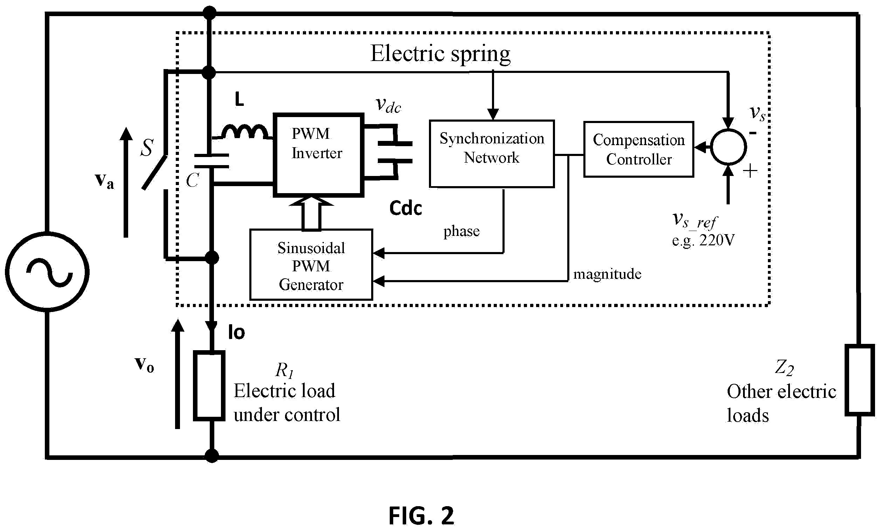

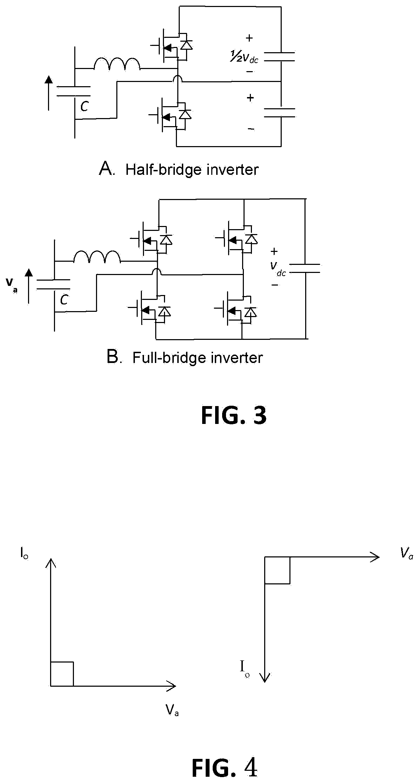

Recently, an electric spring concept based on the three centuries old Hooke's law has been proposed and practically embedded in electric loads to regulate the line or mains voltage in the power grid. See, [4]S.YR. Hui et al, "Power Control Circuit and Method for Stabilizing a Power Supply," US Patent application Serial No. 61/389,489, filed on 4 October 2010 (Patent Application Publication No. US2012/0080420 A1). The electric spring concept refers to the use of a power converter together with its load to form a "smart load" unit that can provide regulation of the mains voltage. With the use of an input voltage control (instead of the traditional output voltage control), reactive power converters (i.e. power converters that handle reactive power only and not active power) have be en used to fulfill the electric spring concept. The electric spring implementation based on the use of a controlled voltage source connected in series with an electric load is described in the above-identified Hui article and is shown in Fig.1. The controlled voltage source can be realized with a reactive power converter. The power converter can be a power inverter in which a laige capacitor 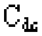 is used as a controllable de voltage source 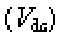 as shown in Fig 2. The power inverter can then be switched in a sinusoidal pulse-width modulated (PWM) manner to generate a switched PWM voltage waveform with a strong fundamental voltage and some high-frequency voltage harmonics. The high-frequency voltage harmonics are filtered by the inductive-capacitive (LC) filter so that only the sinusoidal fundamental voltage 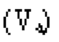 is generated across the capacitor of the LC filter as the voltage output of the electric spring. It should be noted that in the control scheme shown in Fig.2 the electric spring uses "input voltage control." The control variable is the input voltage of the reactive power converter, which is the mains voltage 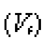 at the location of the installation of the equipment. The output voltage of the reactive power control 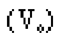 is allowed to fluctuate for the regulation of the mains voltage 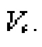 In order to ensure that the power converter works as a reactive power controller, the vector relationship of 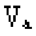 and Iₒ. is perpendicular when Io is not zero as shown in Fig.4.

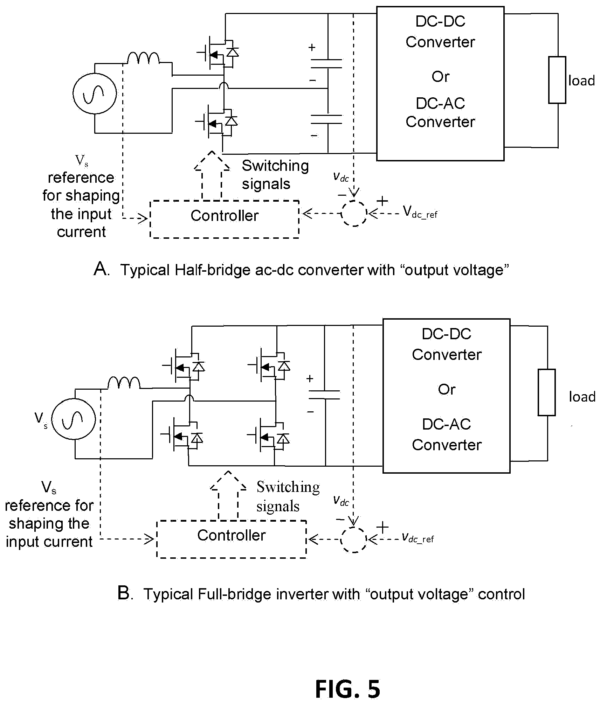

The International Electrotechnical Commission Regulation IEC 61000-3-2 requires offline electric equipment of 20W or above to comply with electromagnetic compatibility requirements. For equipment fed by ac mains, the input power factor must be kept at or above 0.9. In modem electric equipment such as switched mode power supplies for computers and servers, power factor corrected (PFC) ac-dc power converters are commonly used to ensure that the input voltage and input current are in phase (i.e. unity power factor if the input current is sinusoidally shaped). In this regard, the power inverters (half-bridge or full-bridge inverters in Fig.3) can be used as ac-dc power converters as shown in Fig.5.

In existing ac-dc power conversion applications, it is always assumed that the mains voltage is sinusoidal and stable at its nominal rms value (such as 230V), because most developed countries have well regulated mains voltage that is kept to its nominal value with a +/- 6% to lerance in developed countries and +/- 10% in otherregions. The refore, traditional ac-dc power converters normally assume a fairly stable ac mains supply. For this reason, no in put-voltage control (except that in the Hui et al. article and application, which is by the present inventors) has been reported. Traditional ac-dc power converters adopt the "output- voltage control" because they are used for regulating the output de voltage. For the power factor corrected (PFC) converters in Fig.5, the mains voltage is sensed so that the P:,\li'er converter can be switched to force the input current of the power converter to follow the sinusoidal shape of the mains voltage and be in phase with the mains voltage ln this way, near unity power factor can be achieved. The magnitude of the input current is controlled to maintain a fairly constant output de voltage (V dc) through an "output-voltage control" feedback loop. For a 220V-240V rms mains supply, typical Vdc is controlled at a de voltage of about 400V. Because the input voltage and current of this PFC converter are in phase, the PFC p:iwer converter with its output load emulates a pure resistor. Therefore, the PFC converter fed load system consumes active power. Also, power flow is unidirectional from the mains to the load. However, in future power grids with substantial renewable energy sources of an intermittent nature, the assumption that the mains voltage can be stable within the +*I-* 6% is questionable.

U.S. Patent Application Publication No. 2011/0188272 is directed towards a circuit for direct energy extraction from a charged-particle beam. European Patent Application No. 82306817.6 is directed towards a method and apparatus for electrical power conversion. International application WO 96/18937 A1 relates to a bidirectional AC/DC power converter for transferring electrical energy between an AC power grid and a DC device, wherein said bidirectional power converter is configured to handle active power in a bidirectional manner, and wherein said bidirectional power converter is configured to transfer reactive power from the DC device to the AC power grid.

### SUMMARY OF THE INVENTION

Embodiments of the invention are set out in the appended claims.

The present invention is directed a method and apparatus for stabilizing a power grid that includes substantial intermittent energy sources by using bidirectional reactive power controller arrangements.

In an illustrative embodiment an ac-dc power converter, which may be found on a number of consumer products connected to the mains, is modified so that it has input voltage control, which in turn allows it to act as a smart load and to stabilize the grid. Naturally the grid is too powerful for any one converter to balance it, so it is contemplated that the converters will be implemented in a vast number of products so that the overall effect will be a stabilized grid.

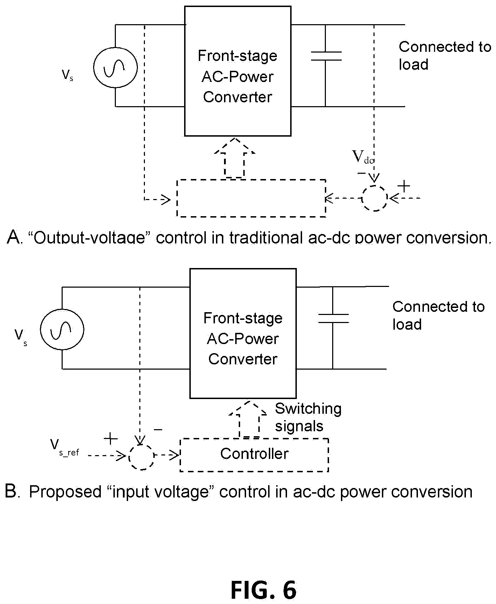

The distinctive feature of the invention with respect to the traditional ac-dc power conversion method is illustrated in Fig. 6. In a traditional schematic, there is no input voltage control because the existing mains voltage in is well regulated. As previously explained, the distributed and intermittent nature of renewable energy sources may cause power imbalance between power generation and load demand, leading to the possibility of power instability such as fluctuation in the mains voltage. The mains vol tag e in future power grids may not be stable. Therefore, "input voltage control" is proposed for ac-dc power converters with both active and reactive power flow control. The principle applies to both single-phase and multi-phase systems.

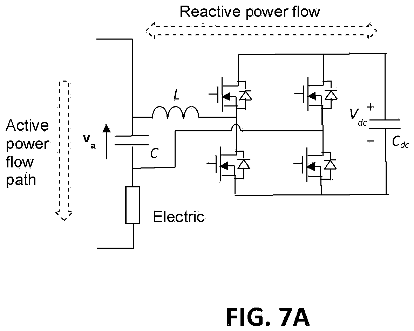

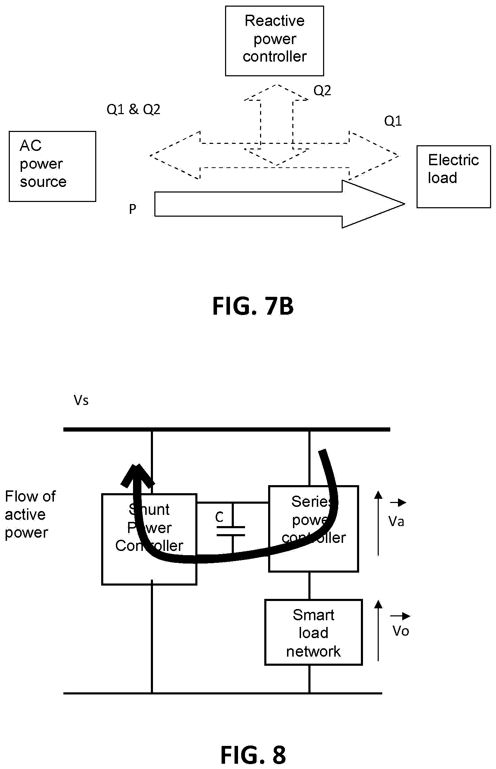

In the Hui published patent application, the electric load is connected in series with filter capacitor C of the power converter (Fig.7A). The corresponding power flow diagram is shown in Fig. 7B. Active power does not flowthrough the power converter. Since the de bulk capacitor of the power converter in Fig.7A does not consume active power, the power converter in Fig.7A only handle s reactive power.

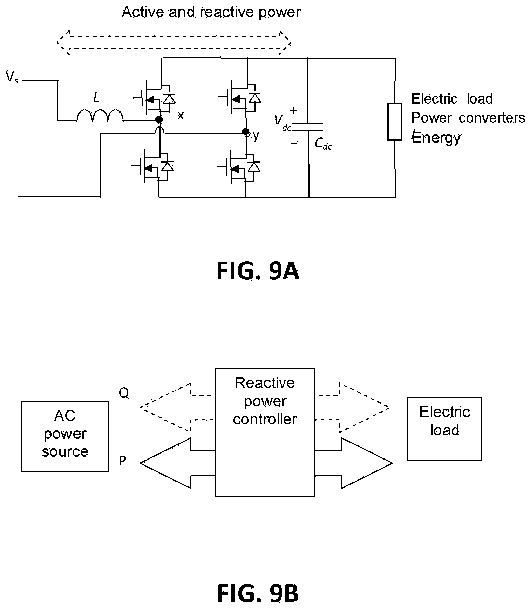

There is also one version of the reactive power controller arrangements in Hui that can handle both active and reactive poweras shown in Fig.8. It should be noted that this power converter circulates active power through the power converter, and that the active power does not come from the electric load. This is in fact a limitation in the proposal described in Hui. This means that active power cannot be transferred from the electric load back to the a.c. mains supply in the proposal of Hui. However, according to the present invention, the electric load is connected to the d.c. bulk capacitor such that the power converter in Fig.9A handles both active and reactive power. The power flow diagram of this embodiment of the invention is shown in Fig.9B.Both active and reactive power components have to go from the mains to the load through the power converter in the present invention. A comparison of the power flow diagram in Fig. 7B wifh that in Fig.9B, highlights the major difference s between the present invention and that of the Hui publication. Since the power converter in this proposal can handle both active and reactive power, the input voltage and current can be in any phase relationship.

The present invention is particularly useful for electric loads with energy storage elements. For example, electric vehicles have batteries and, if recessary, active power can be transferred from the batteries to the a.c. mains supply

The present invention proposes a new approach in order to utilize the electric spring concept in stabilizing future power grids. Similar to the electric spring implementation described in Hui, this new realization has some of the same electric spring features. These include:
(i) the use of "input voltage control" in the power converter with the mains voltage as input,
(ii) the use of a power converter such as a power inverter (i.e. ac-dc power converter), and
(iii) the provision of input voltage regulation functions (i.e. the regulation of the mains voltage).
However, unlike the approach in Hui, the present invention has the following differences as illustrated in Fig. 7B and Fig. 9B using a single-phase system as an example (the principle also applies to multi-phase systems).
(i) The electric load is connected to the bulk d.c. capacitor of the power converter (while the electric load in Hui is connected in series with the filter capacitor of the power converter).
(ii) Electric loads can include a second power converter stag e, an energy storage device and the output load.
(iii) The power converter can handle BOTH active and reactive power (while the power converter in Hui can only handle reactive power).
(iv) Active and reactive power can flow in BOTH directions, i.e. from the mains to the power converter and vice versa.
(v) The vectors of the input voltage and input current of the power converter are NOT necessarily fixed at perpendicular positions. They can be in any phase relationship.
(vi) The control parameter in the power converter can also include the mains frequency ωs to improve the power grid stability.
(vii) The output voltage of the power converter is regulated when the power converter ONLY provides reactive power compensation to the power grid.
(viii) The output voltage of the power converter is allowed to fluctuate when the power converter provide s active power compensation to the power grid.

### BRIEF DESCRIPTION OF DRAWINGS

The foregoing and other features of the present invention will be more readily apparent from the following detailed description and drawings of illustrative embodiments of the invention wherein like reference numerals refer to like parts throughout the various figures unless otherwise specified and in which:
**FIGS. 1A,** 1**B and 1C** illustrate the electric spring concept for neutral boosting and reduction functions;
**FIG. 2**is a block diagram of a prior art reactive power converter in the form of an inverter;
**FIGS. 3A and 3B** are schematic diagrams of prior art half-bridge and full-bridgeinverters, respectively, which can be used as reactive power converters;
**FIG. 4**s a diagram illustrating the vector relationship between voltage and current in the reactive power controller of Fig. 2 when the current Iₒ is not zero;
**FIGS. 5A and 5B** areschematic diagrams of single-phase examples of prior art ac-dc power converters based on half bridge and full-bridge power inverters, respectively, with "output voltage" regulation;
**FIGS. 6A and 6B**are schematic diagrams of respectively a prior artac-dc power converter with output-voltage control and an ac-dc power converter with input voltage control according to an example;
**FIG. 7A**is a schematic diagram of a single phase power converter using an electric spring with reactive power control as in the Hui publication;
**FIG. 7B** is a power flow diagram of the power converter of Fig. 7A;
**FIG. 8**is block diagram illustrating one version of the electric spring in the Hui publication with a series power controller absorbing active power and a shunt power controller feeding the ac tive powerback to the mains power lines.;
**FIG. 9A**isa schematic diagram of a single phase power converter using an electric spring with both active and reactive power control in accordance with an example;
**FIG. 9B** is a power flow diagram of the power converter of Fig. 9A;
**FIG. 10** is a block diagram of an output-voltage control in a prior art ac-dc power conve rsion with well-regulated mains voltage,
**FIG. 11** is a block diagram of an ac-dc power converter with input-voltage control according to an embodiment of the present invention where the mains voltage may not be stable due to intermittent renewable energy sources on the grid;
**FIG. 12** is a block diagram of an ac-dc power converter with an input-voltage control according to another embodiment of the present invention with auxiliary control signals to improve transient and dynamic power system stability;
**FIG. 13** is a block diagram of an ac-dc power converter with an input-voltage control according to a further embodiment of the present invention using a current mode control method:
   **FIG. 14** is a block diagram of an ac-dc power converter with input-voltage control according to a still further embodiment of the present invention; and
   **FIG. 15** is a block diagram of an ac-dc power converter with input-voltage control according to a yet another embodiment of the present invention.

### DETAILED DESCRIPTION

The main objective of using a bi-directional ac-dc power converter with flexible control of the vector relationships of the input voltage and input current of the ac-dc power converter is to provide a new mechanism of regulating the mains voltage. This objective is achieved with the help of an input voltage control loop (Fig.5). An electric load with this front end bidirectional ac-dc power converter and the input voltage control can be considered as a new form of "smart load" that can help stabilise the mains voltage in future power grids that may be subject to disturbance and fluctuation caused by the intermittent nature of renewable power sources. The converter in this proposal can also perform load demand response, suc has load shedding, or even provide active power compensation/injection to the power grid to improve the power balance.

The bidirectional ac-dc power converters concerned in this invention not only include standard power converters constructed with converter legs comprising power switches in 2-level or N-level totem-pole arrangements, but also include other variants of ac-dc power converters such as the Z-inverters. The pinciple applies to both single-phase and multi-phase systems.

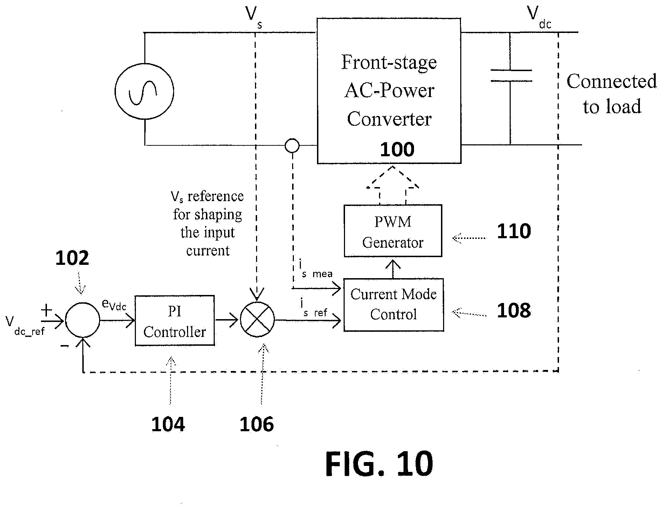

Fig.10 shows the traditional "output-voltage control" scheme of bi-directional ac-dc power converters 100. No input voltage control is used traditionally because in existing power systems with no or limited intermittent renewable power generation, tight mains voltage 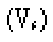 regulation can be assumed. As shown in Fig. 10 the de output voltage 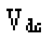 is compared to a reference voltage in comparator 102. The difference signal is applied to PI Controller 104, whose output is multiplied with the input mains voltage 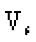 in a multiplier 106. The input current 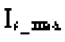 is measured and applied to current mode control 108. The output of multiplier 106 is the current reference signal 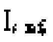 which is also applied to Current Mode Control 10S.The output of the Current Mode Control 108 drives the Pulse-Width Modulation Generator 110 which sets the pulse width and frequency in the AC power C onverter 100. The input current (Is) is switched and shaped by the AC power Converter into the required sinusoidal shape with magnitude and phase angle according to the 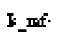

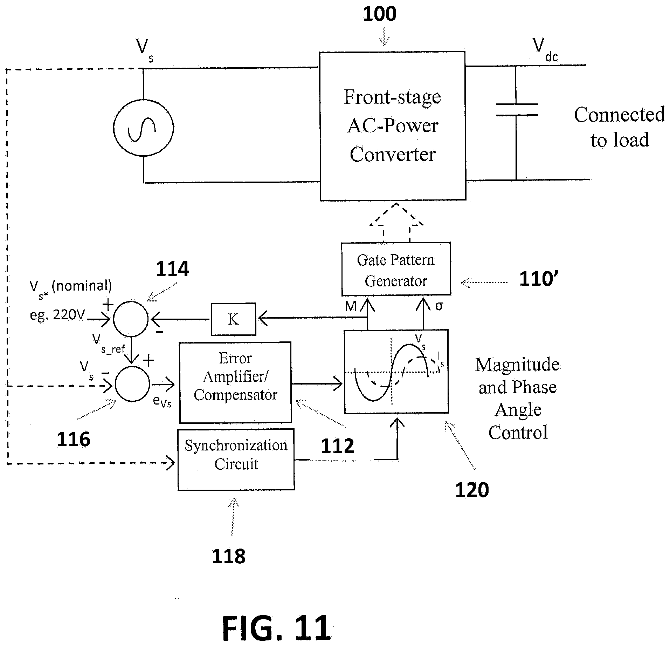

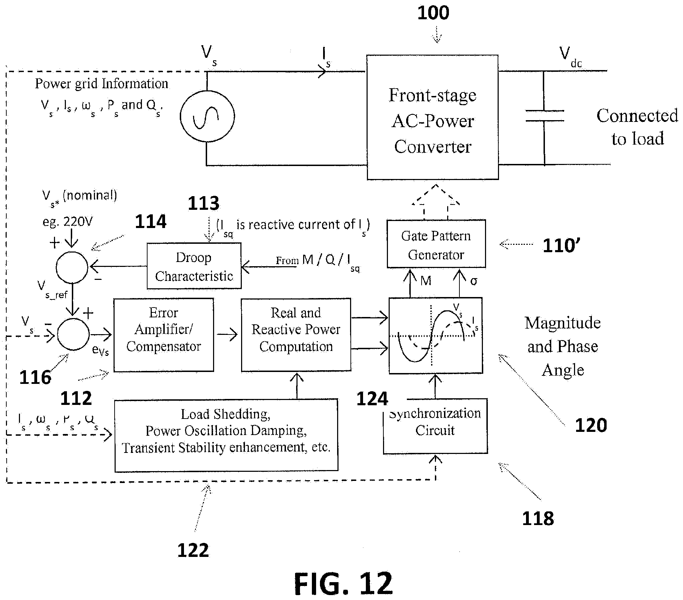

Fig.12 shows a version of the new input-voltage control scheme for bi-directional ac-dc power converters 100 with both active and reactive power flow control. The mains voltage 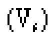 at which this power converter is installed is sensed as a feedback variable (shown in dashed lines). From this sensed voltage signal, the phase angle and/or the frequency of the ac mains voltage can be obtained from circuit 118. The sensed mains voltage is compared with a mains voltage reference 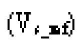 in comparator 116. The mains voltage reference can be derived with the Droop Characteristic circuit 113 based on the magnitude of the PWM signal (M), the reactive power (Q) and the input current 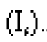 As depicted in Fig.11, the Droop Characteristic circuit can comprise a feedback gain K applied to signal M, and a comparison of that signal to the nominal mains signal 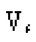 in comparator 114 to derive the mains voltage reference 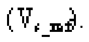 The difference signal 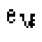 is applied toan error amplifier/compensator 112. As shown in Fig. 11 the output of this circuit is applied to Magnitude and Phase Angle circuit 120. Further, a Synchronization circuit 118 receives the mains signal 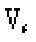 and its output is also applied to circuit 120. Circuit 120 generates at least two control variables, namely the magnitude (M) and the phase angle (σ) of the PWM, which are applied to the Gate Pattern Generator 110', which in turn drive s the front-stage ac-dc power converter 100, with the objective of controlling the active and reactive power of the bidirectional ac-dc power converter so that the mains voltage Vs will be regulated to a certain mains voltage reference 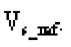 The more complex version shown in Fig. 12 includes a control circuit 122 whose output depends on theinput current (Is), angular frequency (ωs), active power 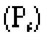 and reactive power 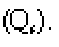 The output of circuit 122 and the Error Amplifier/Compensator 112 are combined in Real and Reactive Power Computation circuit 124. The two outputs of circuit 124 are applied to Magnitude and Phase Angle circuit 120 along with the output of Synchronization circuit 118. The result is the magnitude control signal (M) and the phase angle (σ).

For a single-phase bidirectional ac-dc power converter, this PWM voltage applied to converter 100 from gate pattern generator 110' is the voltage between points x and y (i.e. V_{xy}) in Fig 9A. Beside the magnitude control signal (M) of 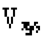 the control loop also provides the phase angle (σ) which is the angle between 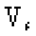 and 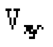 With the control of 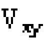 and σ, the magnitude and phase angle of input current (i.e. the input inductor current) can be controlled. Therefore, both active and reactive power can be controlled to regulate the mains voltage to the mains voltage reference value at the location of the installation.

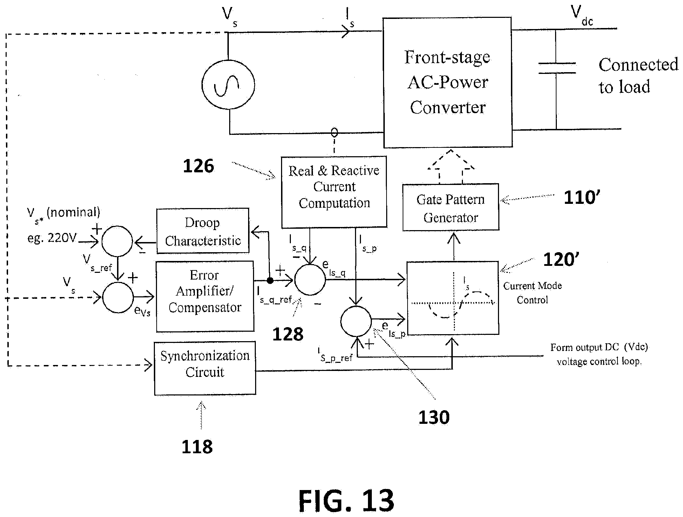

Another input voltage control scheme is shown in Fig.13. In this control scheme, both the input voltage 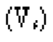 and the input current (Is) are sensed. Information, such as input voltage 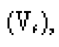 input current (Is), angular frequency 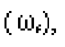 phase angle between Vs and Is, active power (P) and reactive power (Q), are thus obtained. With the knowledge of P and Q and the help of a synchronous circuit 118, the magnitude (M) and angle (σ) control signals for the ac-dc power converter 100 can be derived with the objective of regulating the input mains voltage Vs to follow its reference 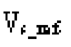

Fig.11 and Fig. 12 show two control schemes that generate control signals for the PWM voltage of the bi-directional ac-dc power converter. These two schemes control the input current indirectly, by directly controlling the PWM voltage of the ac-dc power converter. Thealternative control scheme as shown in Fig. 13 uses a direct current control. The direct current control scheme in Fig.13 is similar to that of the indirect current control schemes in terms of the use of voltage and droop control. However, the magnitude and angle control variables which this scheme generates are for the direct control of the input current. In Fig.13, the instantaneous input current is sensed in circuit 126 and fed into a current control loop for comparison with the current reference 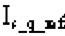 generated at the output of the error circuit 112 by the input voltage control scheme. This input current (I_{f}) is switched and shape d by the bi-directional power converter into the required sinusoidal shape with magnitude and phase angle according to the input voltage control with the objective of regulating the input ac voltage. In particular, quadrature phase current 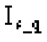 is compared to 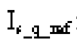 in comparator 12S. The in-phase current 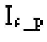 is compared to the reference current 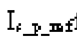 from the output of the de voltage control loop in comparator 130. The outputs of the comparators 128, 130 are directed to the Current Mode Control 120', which in turn drives the Gate Pattern Generator 110'.

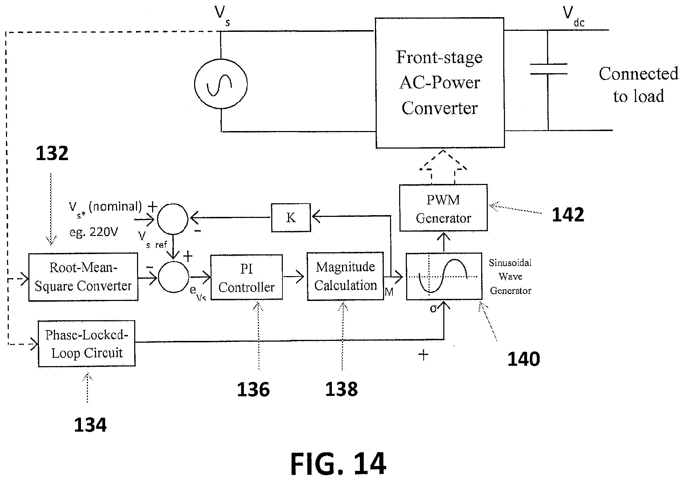

An example of the implementation of the input voltage control scheme based on a proportional-integral (PI) compensator is shown in Fig. 14. In Fig. 14 the input voltage is sampled and applied to both a Root-Mean Square Converter 132 and a Phase-Locked Loop circuit 134. Comparators 114 and 116 are used to generate the output e _{V}iin the same way as shown in Fig. 11, except that one of the inputs to comparator 116 is the output of Root-Mean Square Converter 132 instead of the input voltage Vs. The signal eis applied to the Proportional-Integral (PI) compensator 136, whose output is applied to Magnitude Calculation circuit 138. Note that circuit 138 does not generate a phase signal, only the magnitude signal M Further, the signal M drives the Sinusoidal Wave Generator 140. The output of Phase-Locked Loop circuit 134 is also applied to generator 140, which has an output that drives the PWM generator 142. Generator 142 controls the AC-Power Converter 100.

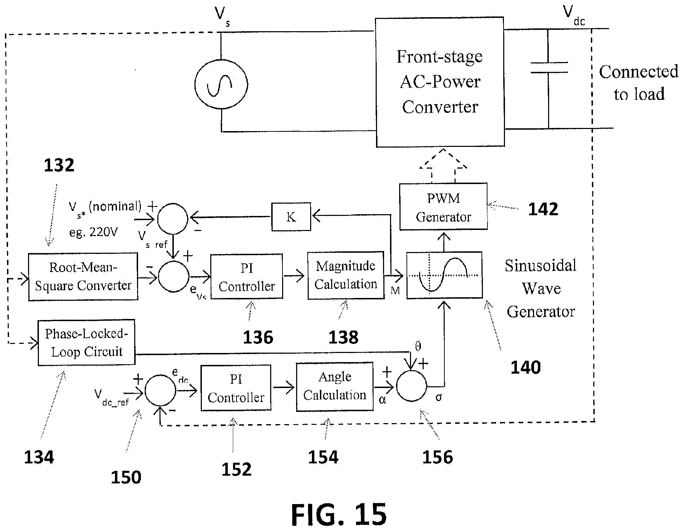

The input voltage control scheme proposed in this invention does not exclude a control methodology that involves the use of output voltage feedback to assist the proposed input voltage control. An example of an implementation of the input voltage control scheme of Fig.11, as represented by the arrangement of Fig. 14, assisted with the output voltage feedback for the "input voltage control" of the bi-directional power converter, is shown in Fig.15. In particular, instead of the output of the Phase-Locked Loop circuit 134 being applied directly to generator 140, it is applied to a comparator 156. The de output voltage of the arrangement 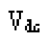 is compared to a reference in comparator 150. The output 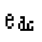 drives a second PI controller 152, whose output drive s an Angle Calculation circuit 154. The output of the Angle Calculation circuit 154 is the se cond input to co mparator 156. It is the output of comparator 156 that drives the Sinusoidal Wave Generator 140 along with the signal M from the Magnitude Calculation circuit 138.

While certain exemplary techniques have been described and shown herein using various methods and systems, it should be understood by those skilled in the art that various other modifications maybe made, and equivalents may be substituted, without departing from claimed subject matter. There fore, it is intended that the claimed subject matter not be limited to the particular examples disclosed, but that such claimed subject matter may also include all implementations falling within the scope of the appended claims.

Any reference in this specification to "one embodiment," "an embodiment," "exemplary embodiment," etc., means that a particular feature, structure, or characteristic described in connection with the embodiment is included in at least one embodiment of the invention. The appearances of such phrases in various places in the specification are not necessarily all referring to the same embodiment.

## Claims

1. An apparatus configured to control power flow between a DC electric load and a mains input AC voltage supply, the apparatus configured to handle active power and reactive power in a bi-directional manner, the apparatus comprising:
a full-bridge power inverter arranged as a bi-directional AC-DC power converter (100), the power converter having AC mains-side terminals and DC load-side terminals, wherein the AC mains-side terminals are arranged to be connected to the mains input AC voltage supply;
a DC bulk capacitor connected in parallel to the DC load-side terminals of the power converter (100), the DC bulk capacitor being arranged to be connected in parallel with the electric load;
a mains input AC voltage control means comprising:
a synchronization circuit (118) configured to receive the mains input AC voltage, Vₛ;
a comparator (116) configured to compare the mains input AC voltage, Vₛ, with a mains reference voltage, V_{s_ref}, and output a difference signal, e_{Vs};
an error amplifier/compensator (112) configured to receive the difference signal, evs;
a magnitude and phase angle circuit (120) configured to receive signals based on an output from the error amplifier/compensator (112) and on an output from the synchronization circuit (118), the magnitude and phase angle circuit further configured to generate at least two control variables including a magnitude, M, and a phase angle, σ, for a Pulse Width Modulation, PWM, voltage;
a gate pattern generator (110') arranged to receive the at least two control variables and generate the PWM voltage;
wherein the gate pattern generator (110') is further configured to drive the power converter based on the PWM voltage to control a mains input AC current magnitude and a mains input AC current phase angle with respect to the mains input AC voltage to regulate fluctuations in the mains input AC voltage with respect to the mains reference voltage.

2. The apparatus of claim 1 wherein the mains input AC voltage supply is an unstable AC mains voltage generated by an AC power source with substantial intermittent renewable energy sources.

3. The apparatus of claim 1 wherein the mains input AC voltage control means is configured to generate voltage magnitude and phase angle signals for the control of the bi-directional AC-DC power converter when voltage-mode control is adopted, and generate current magnitude and phase angle signals for the control of the bi-directional AC-DC power converter when current-mode control is adopted.

4. The apparatus of claim 1 wherein the mains input AC voltage control means is implemented by one of various control approaches including proportional-integral-differential, PID, methods, lead-lag compensation methods and, state-space control, sliding mode control, non-linear boundary control methods.

5. The apparatus of claim 1 further including an output-voltage feedback loop.

6. The apparatus of claim 1 wherein a voltage vector of the mains input AC voltage and a current vector of the mains AC input current generated by the bi-directional AC-DC power converter can deviate from 90 degree so as to process active power.

7. The apparatus of claim 1 wherein the DC electric load contains at least one energy storage element or power source, and the apparatus is configured to transfer active and reactive power from the DC electric load back to the input AC voltage supply in order to regulate the mains input AC voltage of the input AC voltage supply.

8. The apparatus of claim 1 wherein the mains input AC voltage control means is configured to use droop control techniques in a control loop.

9. The apparatus of claim 1 wherein the mains input AC voltage control means includes phase-shift control and pulse-width-modulated switching methods.

## Patentansprüche

1. Vorrichtung, die konfiguriert ist, um Leistungsfluss zwischen einer elektrischen Gleichstromlast und einer Eingangswechselspannungsversorgung des Netzes zu steuern, wobei die Vorrichtung konfiguriert ist, um Wirkleistung und Blindleistung in einer bidirektionalen Weise zu behandeln, wobei die Vorrichtung umfasst:
einen Vollbrücken-Leistungsinverter, der als bidirektionaler Wechselstrom-Gleichstrom-Leistungsumrichter (100) angeordnet ist, wobei der Leistungsumrichter netzseitige Wechselstromanschlüsse und lastseitige Gleichstromanschlüsse aufweist, wobei die netzseitigen Wechselstromanschlüsse angeordnet sind, um mit der Eingangswechselspannungsversorgung des Netzes verbunden zu sein;
einen Gleichstrom-Stützkondensator, der mit den gleichstromlastseitigen Anschlüssen des Leistungsumrichters (100) parallel verbunden ist, wobei der Gleichstrom-Stützkondensator angeordnet ist, um mit der elektrischen Last parallel verbunden zu sein;
ein Mittel der Eingangswechselspannung des Netzes, das umfasst:
eine Synchronisationsschaltung (118), die konfiguriert ist, um die Eingangswechselspannung des Netzes, Vₛ, aufzunehmen;
einen Komparator (116), der konfiguriert ist, um die Eingangswechselspannung des Netzes, Vₛ, mit einer Referenzspannung des Netzes, V_{s_ref}, zu vergleichen und ein Differenzsignal, e_{Vs}, ausgibt;
einen Fehlerverstärker/-kompensator (112), der konfiguriert ist, um das Differenzsignal, e_{Vs}, aufzunehmen;
eine Betrags- und Phasenwinkelschaltung (120), die konfiguriert ist, um Signale auf Grundlage eines Ausgangs von dem Fehlerverstärker/-kompensator (112) und eines Ausgangs von der Synchronisationsschaltung (118) aufzunehmen, wobei die Betrags- und Phasenwinkelschaltung ferner konfiguriert ist, um mindestens zwei Steuervariablen einschließlich eines Betrags, M, und eines Phasenwinkels, σ, für eine Pulsbreitenmodulation, PWM, zu erzeugen;
einen Gate-Muster-Generator (110'), der angeordnet ist, um die mindestens zwei Steuergrößen aufzunehmen und die PWM-Spannung zu erzeugen;
wobei der Gate-Muster-Generator (110') ferner konfiguriert ist, um den Leistungsumrichter auf Grundlage der PWM-Spannung zu betreiben, um eine Eingangswechselstromgröße des Netzes und einen Eingangswechselstromphasenwinkel des Netzes in Bezug auf die Eingangswechselspannung des Netzes zu steuern, um Schwankungen in der Eingangswechselspannung des Netzes in Bezug auf die Referenzspannung des Netzes zu regulieren.

2. Vorrichtung nach Anspruch 1, wobei die Eingangswechselspannungsversorgung des Netzes eine instabile Wechselspannung des Netzes ist, die von einer Wechselstromquelle mit erheblichen intermittierenden erneuerbaren Energiequellen erzeugt wird.

3. Vorrichtung nach Anspruch 1, wobei das Steuerungsmittel der Wechselspannung am Netzeingang konfiguriert ist, um Spannungsstärke- und Phasenwinkelsignale für die Steuerung des bidirektionalen Wechselstrom-Gleichstrom-Leistungsumrichters zu erzeugen, wenn Spannungsbetriebsregelung angewendet wird, und Stromstärke- und Phasenwinkelsignale für die Steuerung des bidirektionalen Wechselstrom-Gleichstrom-Leistungsumrichters zu erzeugen, wenn Strombetriebsregelung angewendet wird.

4. Vorrichtung nach Anspruch 1, bei das Steuerungsmittel der Wechselspannung am Netzeingang durch einen von verschiedenen Steuerungsansätzen implementiert wird, einschließlich Proportional-Integral-Differential-Verfahren, PID, Verfahren zur Kompensation der Verzögerung und Zustandsraumsteuerung, Gleitmodussteuerung und nichtlineare Grenzsteuerungsverfahren.

5. Vorrichtung nach Anspruch 1, ferner einschließend eine Ausgangsspannungs-Rückkopplungsschleife.

6. Vorrichtung nach Anspruch 1, wobei ein Spannungsvektor der Eingangswechselspannung des Netzes und ein Stromvektor des Eingangswechselstroms des Netzes, die von dem bidirektionalen Wechselstrom-Gleichstrom-Leistungsumrichter erzeugt werden, in der Lage sind, von 90 Grad abzuweichen, um Wirkleistung zu verarbeiten.

7. Vorrichtung nach Anspruch 1, wobei die elektrische Gleichstromlast mindestens ein Energiespeicherelement oder eine Energiequelle enthält, und die Vorrichtung konfiguriert ist, um Wirk- und Blindleistung von der elektrischen Gleichstromlast zurück an die Eingangswechselspannungsversorgung zu übertragen, um die Eingangswechselspannung des Netzes der Eingangswechselspannungsversorgung zu regeln.

8. Vorrichtung nach Anspruch 1, wobei die Steuerung der Eingangswechselspannung des Netzes konfiguriert ist, um in einem Regelkreis DROOP-Regelverfahren zu verwenden.

9. Vorrichtung nach Anspruch 1, wobei das Steuerungsmittel für die Eingangswechselspannung des Netzes Phasenverschiebungssteuerung und pulsbreitenmodulierte Schaltverfahren einschließen.

## Revendications

1. Appareil configuré pour commander le flux de puissance entre une charge électrique CC et une alimentation en tension CA d'entrée secteur, l'appareil étant configuré pour gérer la puissance active et la puissance réactive d'une manière bidirectionnelle, l'appareil comprenant :
un onduleur de puissance à pont complet agencé comme un convertisseur de puissance CA-CC bidirectionnel (100), le convertisseur de puissance ayant des bornes côté secteur CA et des bornes côté charge CC, dans lequel les bornes côté secteur CA sont agencées pour être connectées à l'alimentation en tension CA d'entrée secteur ;
un condensateur de découplage CC connecté en parallèle aux bornes côté charge CC du convertisseur de puissance (100), le condensateur de découplage CC étant agencé pour être connecté en parallèle avec la charge électrique ;
des moyens de commande de tension CA d'entrée secteur comprenant :
un circuit de synchronisation (118) configuré pour recevoir la tension CA d'entrée secteur, Vₛ ;
un comparateur (116) configuré pour comparer la tension CA d'entrée secteur, Vₛ, avec une tension de référence secteur, V_{s_ref}, et sortir un signal de différence, eᵥₛ ;
un amplificateur/compensateur d'erreur (112) configuré pour recevoir le signal de différence, e_{Vs} ;
un circuit d'amplitude et d'angle de phase (120) configuré pour recevoir des signaux sur la base d'une sortie de l'amplificateur/compensateur d'erreur (112) et d'une sortie du circuit de synchronisation (118), le circuit d'amplitude et d'angle de phase étant en outre configuré pour générer au moins deux variables de commande incluant une amplitude, M, et un angle de phase, σ, pour une tension de modulation de largeur d'impulsion, PWM ;
un générateur de motif de grille (110') agencé pour recevoir les au moins deux variables de commande et générer la tension PWM ;
dans lequel le générateur de motif de grille (110') est en outre configuré pour piloter le convertisseur de puissance sur la base de la tension PWM pour commander une amplitude de courant CA d'entrée secteur et un angle de phase de courant CA d'entrée secteur par rapport à la tension CA d'entrée secteur pour réguler des fluctuations de la tension CA d'entrée secteur par rapport à la tension de référence secteur.

2. Appareil selon la revendication 1, dans lequel l'alimentation en tension CA d'entrée secteur est une tension secteur CA instable générée par une source d'alimentation CA avec des sources d'énergie renouvelables intermittentes substantielles.

3. Appareil selon la revendication 1, dans lequel les moyens de commande de tension CA d'entrée secteur sont configurés pour générer des signaux d'amplitude de tension et d'angle de phase pour la commande du convertisseur de puissance CA-CC bidirectionnel lorsque la commande en mode tension est adoptée, et générer des signaux d'amplitude de courant et d'angle de phase pour la commande du convertisseur de puissance CA-CC bidirectionnel lorsque la commande en mode courant est adoptée.

4. Appareil selon la revendication 1, dans lequel les moyens de commande de tension CA d'entrée secteur sont mis en oeuvre par l'une de diverses approches de commande incluant des procédés proportionnel-intégral-différentiel, PID, des procédés de compensation d'avance-retard et, des procédés de commande d'espace d'état, de commande de mode glissant, de commande de limites non-linéaires.

5. Appareil selon la revendication 1, incluant en outre un asservissement sortie-tension.

6. Appareil selon la revendication 1, dans lequel un vecteur de tension de la tension CA d'entrée secteur et un vecteur de courant du courant d'entrée CA secteur générés par le convertisseur de puissance CA-CC bidirectionnel peuvent dévier de 90 degrés afin de traiter la puissance active.

7. Appareil selon la revendication 1, dans lequel la charge électrique CC contient au moins un élément de stockage d'énergie ou une source d'alimentation, et l'appareil est configuré pour retransférer la puissance active et réactive de la charge électrique CC vers l'alimentation en tension CA d'entrée afin de réguler la tension CA d'entrée secteur de l'alimentation en tension CA d'entrée.

8. Appareil selon la revendication 1, dans lequel les moyens de commande de tension CA d'entrée secteur sont configurés pour utiliser des techniques de commande de régulation dans une boucle de commande.

9. Appareil selon la revendication 1, dans lequel les moyens de commande de tension CA d'entrée secteur incluent des procédés de commande de déphasage et de commutation à modulation de largeur d'impulsion.
